# EUROPEAN PATENT APPLICATION

(11) **EP 1 104 137 A1**
(43) Date of publication of application: **30.05.2001**
(21) Application number: 99610072.3
(22) Date of filing: 24.11.1999
(51) Int. Cl.: H04L 12/58, G06F 17/60

(54) **Chinese character conversion system for internet and email addresses**

(71) Applicant: Hsu, Chihnan, Taipei (TW)
(72) Inventor: Hsu, Chihnan, Taipei (TW)
(74) Representative: Boesen, Johnny Peder

(57) **Abstract**

The present invention relates to a kind of Chinese transforming system for internet and email address network, especially one providing Chinese (Japanese and Korean) service to Internet users (including simplified and full characters), using Chinese for every network stations and simultaneously for sending E-mails. The principle, procedure and using characteristics: enter Internet by applying WWW Chinese net function or Chinese E-mail program, make use of already registered Chinese network or E-mail, set up a network data warehouse or an E-mail information data warehouse, data warehouse determination, choose plug-in method or chooses to get into data warehouse method, decide if entered information is correct and refuse to check incorrect information, handle correct information then turn direction and join program to turn to correct network or E-mail address. Hence, the present invention allows the Chinese population from every parts of the world to keep network communication without any language obstacles.

## Description

### TECHNICAL FIELD

The present invention relates to a kind of Chinese transforming system for Internet and E-mail address network, especially one providing Chinese (Japanese and Korean) service to Internet users (including simplified and full characters) , using Chinese for every network stations and simultaneously sending E-mails.

### INVENTION BACKGROUND

The present invention can make up for the English network standard causing Chinese users' inconvenience and obstacle , thus influencing business and personal use of Internet. Many companies use an English name to register which cannot comply with the company's image and popularity.

The present invention provides a Chinese and E-mail address network such that clients' memory burden and inconvenience for English language is decreased thus increasing use of Internet and spreading popularity of companies.

### SUMMARY OF THE INVENTION

The present invention relates to a kind of Chinese transforming system for Internet and E-mail address network, especially a Chinese (Japanese and Korean) service to Internet users (including simplified and full characters) , using Chinese for every network stations and simultaneously sending E-mails. The principle, procedure and using characteristics: get to Internet by applying WWW Chinese net function or Chinese E-mail program, get into already registered Chinese network or E-mail address, set up a network data warehouse or an E-mail information data warehouse, data warehouse determination, choose plug-in method or choose to get into data warehouse, decide if entered information is correct and refuse to check incorrect information, handle correct information then turn direction and join program to turn to correct network or E-mail address. Hence, the present invention allows the Chinese population from every parts of the world to keep network communication without any language obstacles.

### BRIEF DESCRIPTION OF THE DRAWINGS

The following diagram and descriptions are referred for further reference of the examiner:

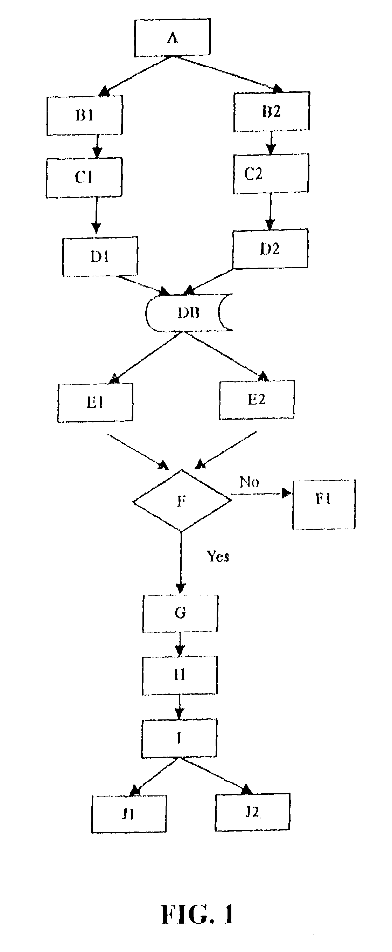

FIG. 1 refers to the system procedure of the present invention.

### NUMERICALS:

A-get into network B1-using WWW Chinese network function
B2-or use program of Chinese E-mail
C1-get into already registered Chinese network
C2-or get into already registered E-mail address
D1-set up a network data warehouse
D2-or set up an E-mail information data warehouse
DB-data warehouse determination E1 -choose plug-in method
E2-or choose to get in data warehouse method
F-decide if entered information is correct
F1-refusal to check incorrect information
G-handle correct information I1 -turn direction
I-joining program J1-turn to correct network
J2-or turn to correct E-mail address

### BEST MODE FOR CARRYING OUT THE INVENTION

With reference to FIG. 1 showing the system procedure of the present invention, first of all, get into network A and after connection, use W WW Chinese network function B1, or use program of Chinese E-mail B2, get into already registered Chinese network C1, or get into already registered E-mail address C2, set up a network data warehouse D1, or set up an E-mail information data warehouse D2, data warehouse determination DB and finally choose plug-in method E1, or choose to get in data warehouse method E2 then decide if entered information is correct F and refuse to check incorrect information F1 and handle correct information G, then turn direction and join program J to turn to correct network J1 or turn to correct E-mail address J2 thus completing procedure of present invention.

## Claims

1. A kind of Chinese transforming system for Internet and E-mail address network with principle, procedure and characteristics as follows: First, get into network, use WWW Chinese network function, or use program of Chinese E-mail an get into already registered Chinese network or E-mail address, then set up a network data warehouse or an E-mail information data warehouse, data warehouse determination, choose plug-in method or choose to get in data warehouse method and decide if entered information is correct. If information is incorrect, refuse to check and if correct, turn direction and join programs such that correct network or E-mail address is found.
